# EUROPÄISCHE PATENTSCHRIFT

(11) **EP 2 914 875 B1**
(45) Veröffentlichungstag und Bekanntmachung des Hinweises auf die Patenterteilung: **27.03.2019**
(21) Anmeldenummer: 13782660.8
(22) Anmeldetag: 23.10.2013
(51) Int. Cl.: F16H 3/00, F16H 37/04, B60K 17/346

(54) **DOPPELKUPPLUNGSGETRIEBE**
DOUBLE CLUTCH TRANSMISSION
TRANSMISSION À DOUBLE EMBRAYAGE

(30) Priorität: 30.10.2012 DE 102012021598
(43) Veröffentlichungstag der Anmeldung: 09.09.2015
(73) Patentinhaber: Audi AG, 85045 Ingolstadt (DE)
(72) Erfinder: MÄRKL, Johann, 86633 Neuburg a. d. Donau (DE); HEITMANN, Axel, 71229 Leonberg (DE); HUMMEL, Steffen, 85055 Ingolstadt (DE); VOLLMER, Frank, 85049 Ingolstadt (DE); SCHMIDT, Alexander, 85055 Ingolstadt (DE)
(74) Vertreter: Lehle, Josef
(86) Internationale Anmeldenummer: PCT/EP2013/003187
(87) Internationale Veröffentlichungsnummer: WO 2014/067635

(56) Entgegenhaltungen:
- EP-A1- 0 797 025
- DE-A1- 3 546 454
- JP-A- 2002 364 718

## Beschreibung

Die vorliegende Erfindung betrifft ein Doppelkupplungsgetriebe als Geschwindigkeits-Wechselgetriebe für Kraftfahrzeuge gemäß dem Oberbegriff des Patentanspruchs 1.

Derartige Doppelkupplungsgetriebe sind bei einem guten Getriebewirkungsgrad als automatisierte Schaltgetriebe einsetzbar, die zudem durch die Aufteilung auf zwei Teilgetriebe und zwei Trennkupplungen schnell und ohne Unterbrechung der Zugkraft schaltbar sind. In dem Bestreben, derartige Wechselgetriebe optimal an die Antriebsleistungen der Antriebsaggregate bzw. von Brennkraftmaschinen anzupassen, ist eine große Getriebespreizung erwünscht, die zum Beispiel durch das Vorsehen vermehrter Vorwärtsgänge (bei nicht zu großen Übersetzungssprüngen) realisiert werden kann.

Aus der DE 35 46 454 A1 ist ein solches gattungsgemäßes Doppelkupplungsgetriebe bekannt. Aus der JP 2002 364718 A ist ein Sechs-Gang-Doppelkupplungsgetriebe bekannt. Aus der EP 0 797 025 A1 ist ein Doppelkupplungsgetriebe mit zwei Teilgetrieben bekannt, wobei jedem Teilgetriebe eine Vorwärts/Rückwärts-Gruppe und eine Zwei-Gang-Gruppe vorgeschaltet ist.

Aufgabe der Erfindung ist es, ein Doppelkupplungsgetriebe der gattungsgemäßen Art anzugeben, das bei einer baulich kompakten Konstruktion eine große Getriebespreizung und eine erhöhte Anzahl von insbesondere Vorwärtsgängen ermöglicht und das steuerungstechnisch gut beherrschbar ist.

Die Aufgabe ist durch die Merkmale des Patentanspruchs 1 gelöst. Vorteilhafte Ausgestaltungen und Weiterbildungen der Erfindung geben die abhängigen Ansprüche an.

Erfindungsgemäß wird vorgeschlagen, dass dem Teilgetriebe A mit der Eingangs-Hohlwelle ein in zwei Übersetzungsstufen umschaltbares Planetengetriebe vorgeschaltet ist. Das Planetengetriebe bewirkt im Teilgetriebe A eine Verdoppelung der Gänge, wodurch im Teilgetriebe B trotz der verwirklichbaren, größeren Getriebespreizung die Anzahl der Zahnradsätze gegenüber einem konventionellen Radsatz verringert werden kann, so dass letztendlich die Baulänge des Getriebes nicht vergrößert ist und der Mehraufwand gering gehalten werden kann. Die im Teilgetriebe A realisierten Vorwärtsgänge können je Zahnradsatz in zwei unterschiedlichen Übersetzungen gefahren werden, wobei auch die Umschaltung relativ einfach und automatisiert erfolgen kann. Die Gänge im Teilgetriebe B werden dabei so zugeordnet, dass die zugkraftunterbrechungsfreie Umschaltung der Gänge gewahrt bleibt.

Das Planetengetriebe kann in an sich bekannter Weise ein Eingangselement, ein Ausgangselement und ein über eine Bremse festsetzbares Übertragungselement zum Schalten der niedrigeren (das heißt "kürzeren") Übersetzungsstufe aufweisen, die zu einem höheren Ausgangsmoment führt. Über die Kupplung K1 der Doppelkupplung kann ferner in die 1:1-Übersetzungsstufe umgeschaltet werden, wobei die Kupplung K1 zwei Elemente (zum Beispiel das Eingangselement und das Übertragungselement) des Planetengetriebes miteinander verbindet, so dass in der 1:1-Übersetzung keine Übertragungsverluste auftreten.

Die Bremse und die Kupplung K1 der Doppelkupplung sind bevorzugt hydraulisch betätigbare, reibschlüssig wirkende Elemente zum Beispiel der Lamellenbauart. Die Doppelkupplung ist mit einem antreibenden Antriebsaggregat bzw. einer Brennkraftmaschine trieblich verbindbar. Hierzu weist die zum Beispiel in Lamellenbauart ausgeführte Doppelkupplung ein Kupplungsgehäuse auf, an dem eine Kraftabgabewelle der Brennkraftmaschine drehfest angeschlossen ist. Bei aktivierter Brennkraftmaschine ist daher das Kupplungsgehäuse permanent in Drehung versetzt. Der Kraftfluß wird daher über das Kupplungsgehäuse entweder zur ersten Eingangswelle oder zur zweiten Eingangswelle geleitet.

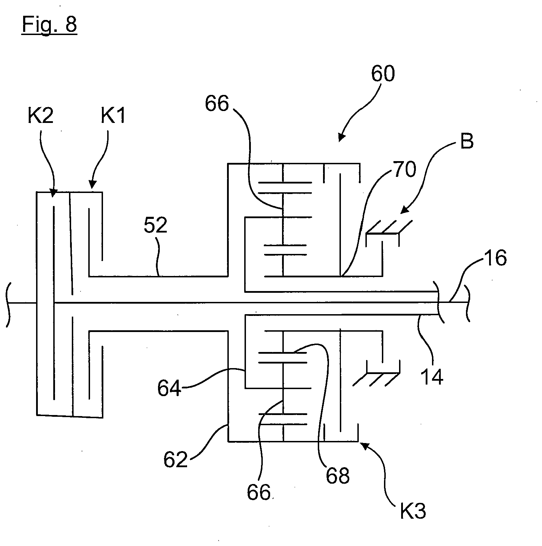

Das Planetengetriebe kann als Eingangselement ein erstes Sonnenrad, als Ausgangselement ein zweites Sonnenrad und als Übertragungselement einen Steg aufweisen, auf dem Stufenplanetenräder gelagert sind, die mit den beiden Sonnenrädern in Eingriff sind. Dabei ist das Eingangselement (zum Beispiel das antreibende Sonnenrad) ständig trieblich mit dem Gehäuse der Doppelkupplung verbunden, während das Übertragungselement bzw. der Steg über die Kupplung K1 der Doppelkupplung zuschaltbar ist. Dies hat den Vorteil, dass ein Anfahren des Kraftfahrzeugs zum Beispiel im ersten Vorwärtsgang oder im Rückwärtsgang und in der niedrigeren Übersetzungsstufe des Planetengetriebes über die an den Steg angebundene Bremse steuerbar ist, wodurch gegebenenfalls die entsprechende Kupplung K1 mit einem geringeren Kupplungsmoment ausgelegt sein kann. Zudem kann dadurch die separate Kupplung (das heißt K3 in der Fig. 8) zum Umschalten des Planetengetriebes entfallen.

In einer weiteren, vorteilhaften Ausgestaltung der Erfindung kann das Planetengetriebe als Minusgetriebe (Standübersetzung zum Beispiel i₀ = -3) ausgelegt sein, wodurch insbesondere in der Reduzierstufe der Anteil an Kupplungsleistung bzw. der Übertragungs-Wirkungsgrad weiter verbesserbar ist.

In einer weiteren, bevorzugten Auslegung der Erfindung kann das Wechselgetriebe zumindest acht Vorwärtsgänge aufweisen, von denen der erste und zweite Vorwärtsgang, der vierte und fünfte Vorwärtsgang und der siebte und achte Vorwärtsgang dem Teilgetriebe A mit dem vorgeschalteten Planetengetriebe und der dritte und sechste Vorwärtsgang dem Teilgetriebe B zugeordnet sind. Die acht Vorwärtsgänge sind somit durch fünf Zahnradsätze realisierbar, wobei die Vorwärtsgänge der drei Zahnradsätze des Teilgetriebes A über das umschaltbare Planetengetriebe verdoppelt sind.

Bei einem Wechselgetriebe mit mehr als acht Vorwärtsgängen kann zudem dem Teilgetriebe B über einen weiteren Zahnradsatz der neunte Vorwärtsgang und gegebenenfalls dem Teilgetriebe A ebenfalls über einen weiteren Zahnradsatz die Vorwärtsgänge 10 und 11 zugeordnet sein.

Schließlich kann dem Teilgetriebe A mit dem vorgeschalteten Planetengetriebe ein Zahnradsatz mit einem Zwischenzahnrad zur Darstellung von zwei Rückwärtsgängen zugeordnet sein; alternativ kann der Zahnradsatz mit Zwischenzahnrad zur Bildung nur eines Rückwärtsganges im Teilgetriebe B angeordnet sein. Letzteres hat den Vorteil, dass die Anfahrgänge (vorwärts - rückwärts) nicht über das gleiche Anfahrelementgesteuert werden und damit gegebenenfalls ungleicher Kupplungsverschleiß vermieden ist.

Mehrere Ausführungsbeispiele der Erfindung sind im Folgenden anhand der beiliegenden, schematischen Zeichnung näher erläutert. Es zeigen:
- Fig. 1: ein Blockschaltbild eines Doppelkupplungsgetriebes für ein Allrad getriebenes Kraftfahrzeug, mit zwei Teilgetrieben A und B, wobei dem Teilgetriebe A ein Planetengetriebe mit Stufenplanetenrädern vorgeschaltet ist;
- Fig. 2: ein weiteres, zur Fig. 1 alternatives Planetengetriebe, das als Minusgetriebe ausgelegt ist;
- Fig. 3: eine Schaltungsmatrix mit Darstellung der Schaltfolgen für ein acht Vorwärtsgänge aufweisendes Doppelkupplungsgetriebe;
- Fig. 4 bis 7: jeweils Teilansichten von weiteren Ausführungsbeispielen;
- Fig. 8: ein nicht von der Erfindung umfasstes Vergleichsbeispiel; und
- Fig. 9: ein weiteres Doppelkupplungsgetriebe mit insgesamt zehn Vorwärtsgängen sowie einem Rückwärtsgang R und vier Schaltgruppen.

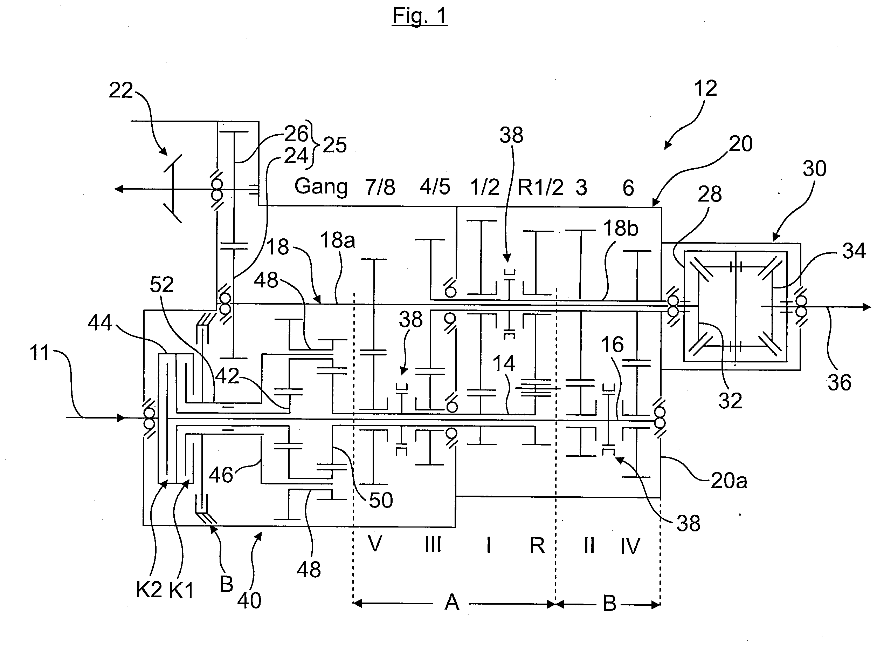

Die Fig. 1 zeigt grob schematisch ein Doppelkupplungsgetriebe 12 als Geschwindigkeits-Wechselgetriebe für Kraftfahrzeuge, mit zwei koaxialen Getriebe-Eingangswellen 14, 16, die über zwei Trennkupplungen K1, K2 mit einem antreibenden Antriebsaggregat bzw. einer Brennkraftmaschine trieblich verbindbar sind. Hierzu weist die zum Beispiel in Lamellenbauart ausgeführte Doppelkupplung ein Kupplungsgehäuse 44 auf, an dem eine Kraftabgabewelle 11 der Brennkraftmaschine drehfest angeschlossen ist. Bei aktivierter Brennkraftmaschine ist daher das Kupplungsgehäuse 44 permanent in Drehung versetzt. Der Kraftfluß wird daher über das Kupplungsgehäuse 44 entweder zur ersten Eingangswelle 14 oder zur zweiten Eingangswelle 16 geleitet. Die Eingangswelle 14 ist als Hohlwelle ausgeführt.

Achsparallel zu den Eingangswellen 14, 16 ist eine Abtriebswelle 18 vorgesehen, die sich im Ausführungsbeispiel aus einer ersten Ausgangswelle 18a und einer zweiten, als Hohlwelle ausgeführten, koaxialen Ausgangswelle 18b zusammensetzt.

Die erste Ausgangswelle 18a treibt über eine, aus Stirnzahnrädern 24, 26 bestehende Abtriebsstufe 25 auf ein an das Getriebegehäuse 20 angebautes Vorderachsdifferenzial 22 (nur angedeutet) ab, während die zweite Ausgangswelle 18b auf das Ausgleichsgehäuse 28 eines Zwischenachsdifferenziales 30 abtreibt, dessen Abtriebselemente bzw. Achskegelräder 32, 34 einerseits mit der Ausgangswelle 18a zum Antrieb des vorderen Achsdifferenzials 22 und andererseits mit einer Abtriebswelle 36 zum Antrieb eines hinteren Achsdifferenzials (nicht dargestellt) des Kraftfahrzeugs verbunden sind.

Die dargestellte Auslegung der Abtriebswelle 18 mit dem Zwischenachsdifferenzial 30 ermöglicht es, dass einzelne Vorwärtsgänge direkt auf das vordere Achsdifferenzial abtreiben, während andere Vorwärtsgänge und der Rückwärtsgang über das Zwischenachsdifferenzial 30 einen Allradantrieb darstellen.

Die Abtriebswelle 18 kann im Falle eines Abtriebs nur auf ein Achsdifferenzial 22 (Frontantrieb) oder über die Abtriebswelle 36 auf ein hinteres Achsdifferenzial (Heckantrieb) auch einteilig und ohne Zwischenachsdifferenzial 30 ausgeführt sein.

Die besagten Wellen 14, 16, 18, etc: sind über nur angedeutete Wälzlager in dem Getriebegehäuse 20 drehbar gelagert.

Das Doppelkupplungsgetriebe 12 ist in ein Teilgetriebe A und ein Teilgetriebe B unterteilt, wobei sich die Eingangs-Hohlwelle 14 nur innerhalb des Teilgetriebes A erstreckt, während die Eingangswelle 16 durch die Eingangswelle 14 hindurch in das Teilgetriebe B bis zu dessen Abschlusswand 20a geführt ist.

Im Teilgetriebe A sind drei Vorwärtsgang-Zahnradsätze I, III, V und ein Rückwärtsgang-Zahnradsatz R mit einem integrierten Umkehrzahnrad angeordnet, die sich in bekannter Weise aus Festzahnrädern und Loszahnrädern zusammensetzen, wobei die Loszahnräder über Synchronkupplungen (allgemein mit 38 bezeichnet) geschaltet werden können. Die Zahnradsätze I, III, V, R bilden die Vorwärtsgänge 1/2, 4/5, 7/8 und zwei Rückwärtsgänge R1/2 (wird noch erläutert).

Im Teilgetriebe B sind zwei Vorwärtsgang-Zahnradsätze II und IV vorgesehen, die sich ebenfalls aus Festzahnrädern und über eine Synchronkupplung 38 schaltbare Loszahnräder zusammensetzen und die in der entsprechenden Übersetzungsauslegung die Vorwärtsgänge 3 und 6 bilden.

Dem Teilgetriebe A ist benachbart der Doppelkupplung K1, K2 ein Planetengetriebe 40 vorgeschaltet, das koaxial zur Eingangs-Hohlwelle 14 ausgeführt ist und das in zwei Übersetzungsstufen bzw. in eine niedrigere/höhere Übersetzungsstufe und eine 1:1-Übersetzungsstufe umschaltbar ist.

Dabei ist das Eingangselement des Planetengetriebes 40 durch ein erstes Sonnenrad 42 gebildet, das an das Gehäuse 44 der Doppelkupplung K1, K2 angeschlossen und somit ständig angetrieben ist.

Der Steg 46 als Übertragungselement des Planetengetriebes 40 trägt mehrere, drehbar gelagerte Stufenplanetenräder 48, von denen das eine, größere Zahnrad mit dem Sonnenrad 42 kämmt und trieblich mit der Kupplung K1 verbindbar ist.

Das kleinere Zahnrad der Stufenplanetenräder 48 ist mit einem zweiten Sonnenrad 50 als Ausgangselement des Planetengetriebes 40 mit der Eingangs-Hohlwelle 14 des Teilgetriebes A verbunden.

Ferner ist die den Steg 46 tragende Hohlwelle 52 an eine ähnlich einer Lamellenkupplung aufgebauten, gehäusefesten Bremse B angeschlossen, über die der Steg 46 gesteuert/geregelt festbremsbar ist.

In der nachfolgenden Beschreibung ist beispielhaft bei geöffneter Kupplung K1 sowie bei betätigter Bremse B eine niedrigere Übersetzungsstufe geschaltet, während bei geschlossener Kupplung K1 sowie bei nicht betätigter Bremse B eine im Vergleich dazu höhere Übersetzungsstufe geschaltet ist, so das sich die Erfindung wie folgt darstellt:
Ist die Kupplung K1 geöffnet und die Bremse B betätigt, so treibt das Sonnenrad 42 über die Stufenplanetenräder 48 das Sonnenrad 50 und dieses die Eingangswelle 14 in der niedrigeren Übersetzungsstufe an; dies entspricht bei entsprechend geschalteten Zahnradsätzen des Teilgetriebes A den Vorwärtsgängen 1 (hier wird das Anfahren des Kraftfahrzeugs durch die Bremse B über das ausgeübte Bremsmoment gesteuert), 4 und 7, sowie bei geschaltetem Zahnradsatz R dem Rückwärtsgang R1. Wird die Bremse B gelöst, so ist die Antriebsleistung unterbrochen.

Zum Umschalten des Planetengetriebes 40 in die 1:1-Übersetzungsstufe wird die Kupplung K1 geschlossen, wobei nunmehr das Sonnenrad 42 und der Steg 46 zusammengeschaltet und das Planetengetriebe 40 in sich blockiert ist. Das Antriebsmoment teilt sich über die Kupplung K1 und das Gehäuse 44 entsprechend auf. In der 1:1-Übersetzungsstufe des Planetengetriebes 40 können die Vorwärtsgänge 2, 5, 8 und der Rückwärtsgang R2 geschaltet werden.

Zum Schalten der Vorwärtsgänge 3 und 6 des Teilgetriebes B werden in herkömmlicher Weise die Zahnradsätze II oder IV über die Synchronkupplung 38 geschaltet und über die Trennkupplung K2 aktiviert. Dabei sind die Kupplung K1 und die Bremse B des Planetengetriebes 40 gelöst.

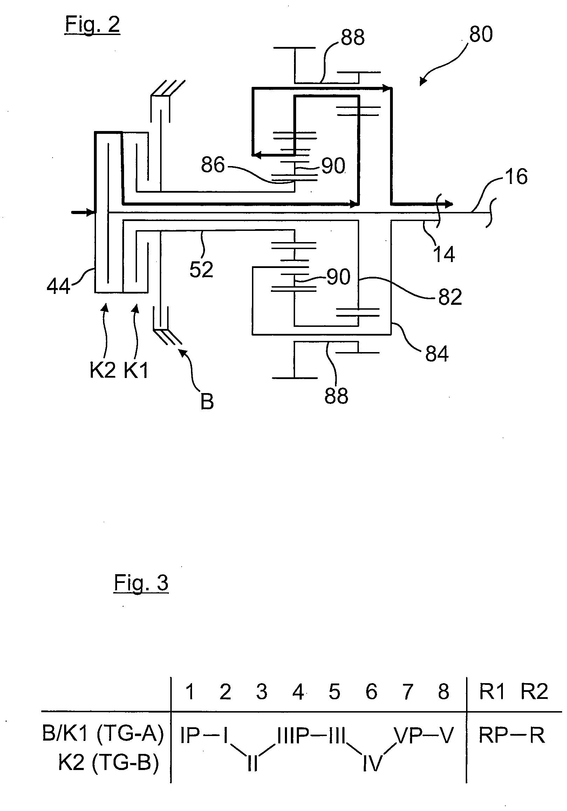

Die Schaltungsmatrix gemäß Fig. 3 zeigt die Schaltfolge zum Beispiel beim Durchfahren der Vorwärtsgänge 1 bis 8 und der beiden möglichen Rückwärtsgänge R1 und R2.

Wird das Kraftfahrzeug im 1. Gang angefahren, so wird nach dem Kuppeln des Zahnradsatzes I mittels der Synchronkupplung 38 über die Bremse B das Antriebsmoment eingeleitet, wobei sich das Planetengetriebe 40 wie vorbeschrieben in der niedrigeren Übersetzungsstufe befindet (dies ist jeweils angezeigt zum Beispiel mit IP; P steht jeweils für Planetengetriebe 40 aktiv).

Anschließend wird der 2. Gang geschaltet, indem die Bremse B gelöst und die Kupplung K1 geschlossen wird. Dies kann ohne jegliche Zugkraftunterbrechung gesteuert werden. In den bis jetzt beschriebenen Schaltvorgängen kann im Teilgetriebe B der 3. Gang bereits über die Synchronkupplung 38 vorab eingelegt werden.

Beim Schalten in den 3.Gang wird die Kupplung K1 geöffnet und ohne Unterbrechung der Zugkraft gleichzeitig die Kupplung K2 geschlossen.

Beim Fahren im 3. Gang kann im Teilgetriebe A der Zahnradsatz III für den 4. und 5. Gang über die Synchronkupplung 38 geschaltet werden. Das Aktivieren der Gänge 4 und 5 erfolgt dann analog zu den vorbeschriebenen Gängen 1 und 2 über die Bremse B (IIIP) und nachfolgend über die Kupplung K1 (III).

Gleiches gilt für den 6.Gang im Teilgetriebe B und die weiteren Gänge 7 und 8 über das Teilgetriebe A.

Zum Schalten der Rückwärtsgänge über den Rückwärtsgang-Zahnradsatz R wird der Zahnradsatz R über die Synchronkupplung 38 geschaltet und sodann entweder die Bremse B betätigt (R1 bzw. RP) oder bei gelöster Bremse B die Kupplung K1 geschlossen (R2 bzw. R).

Das Doppelkupplungsgetriebe kann weitere Gänge, etwa Vorwärtsgänge 9 bis 11 aufweisen. Dazu wäre in dem Teilgetriebe A gemäß Fig. 1 ein zusätzlicher Zahnradsatz VII vorzusehen, der bevorzugt an Stelle des dargestellten Rückwärtsgang-Zahnradsatzes RW angeordnet sein könnte und der in der entsprechenden Übersetzungsauslegung die Gänge 10 und 11 bilden könnte.

Ferner könnten in dem Teilgetriebe B ein zusätzlicher Zahnradsatz VI für einen 9. Gang und der Rückwärtsgang-Zahnradsatz RW angeordnet sein, die über eine gemeinsame Synchronkupplung 38 geschaltet werden könnten.

Die Fig. 2 zeigt eine weitere, alternative Ausgestaltung des vorgeschalteten Planetengetriebes; funktionell gleiche Teile sind wiederum mit gleichen Bezugszeichen versehen.

Das Planetengetriebe gemäß Fig. 2 ist als Minusgetriebe 80 ausgelegt, weist also eine negative Standgetriebeübersetzung (im Ausführungsbeispiel von i₀ = -3) auf. Darunter ist das Verhältnis zwischen den Winkelgeschwindigkeiten bzw. den Drehzahlen der Zentralradwellen in einem Planetengetriebe bei stillstehendem oder als stillstehend gedachtem Steg zu verstehen.

Das Minusgetriebe 80 weist als Eingangselement ein erstes Sonnenrad 82 auf, das an das Gehäuse 44 der Doppelkupplung K1, K2 angeschlossen und deshalb ständig angetrieben ist.

Ferner ist ein Steg 84 als mit der Eingangs-Hohlwelle 14 des Teilgetriebes A trieblich verbundenes Ausgangselement vorgesehen.

Ein zweites Sonnenrad 86 bildet das Übertragungselement des Minusgetriebes 80, das über die Hohlwelle 52 an die Kupplung K1 angeschlossen ist. Die Kupplung K2 ist wie vorstehend an die Eingangswelle 16 des Teilgetriebes B angebunden.

Der Steg 84 trägt drehbar gelagert erste Stufenplanetenräder 88, von denen das kleinere Zahnrad mit dem Sonnenrad 82 kämmt, während das größere Zahnrad mit radial innenliegenden, zweiten Planetenrädern 90 und diese mit dem zweiten Sonnenrad 86 in Eingriff sind.

An die Hohlwelle 52 des zweiten Sonnenrads 86 ist wiederum die gehäusefeste Bremse B angeschlossen.

Die Umschaltfunktion des Minusgetriebes 80 ist, von dem unterschiedlichen Momentenfluss (mit Pfeilen dargestellt) abgesehen, gleich dem Planetengetriebe 40. In der niedrigeren Übersetzungsstufe ist die Bremse B betätigt bzw. das Sonnenrad 86 festgesetzt. Das Sonnenrad 82 treibt über die Stufenplanetenräder 88 und die Planetenräder 90 auf den Steg 84 und dieser auf die Eingangs-Hohlwelle 14 des Teilgetriebes B.

Ist die Bremse B und die Kupplung K1 gelöst, so erfolgt keine Übertragung von Antriebsleistung.

Zur Umschaltung des Minusgetriebes 80 auf die 1:1-Übersetzung wird die Kupplung K1 geschlossen, wodurch die beiden Sonnenräder 82, 86 über den Steg 84 zusammengeschaltet bzw. das Minusgetriebe 80 blockiert ist.

Die Schaltfolge der Vorwärtsgänge 1 bis 8 oder gegebenenfalls bis 11 und der Rückwärtsgänge R ist gleich der zur Fig. 1 bzw. gleich der Schaltungsmatrix gemäß Fig. 3.

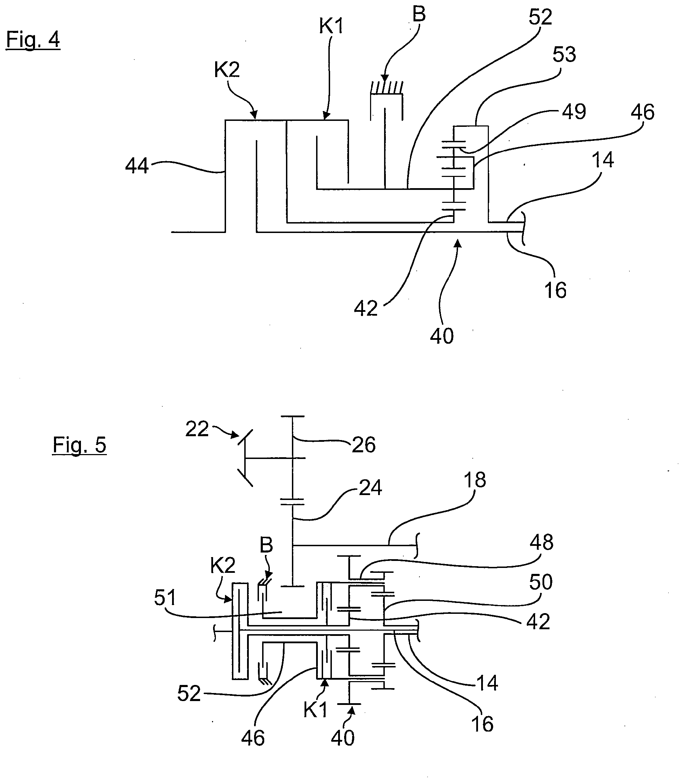

Die folgenden Ausführungsbeispiele der Fig. 4 bis 7 betreffen ebenfalls jeweils ein Doppelkupplungsgetriebe, von dem allerdings lediglich die Doppelkupplung sowie das Planetengetriebe 40 dargestellt ist. Die Funktionsweise und der Aufbau der Doppelkupplungsgetriebe der Fig. 4 bis 7 ist mit dem in der Fig. 1 gezeigten Doppelkupplungsgetriebe vergleichbar, so dass auf eine ausführliche Beschreibung verzichtet werden kann.

Wie in der Fig. 1 ist auch in der Fig. 4 der Eingangswelle 14 des nicht dargestellten Teilgetriebes A ein Planetengetriebe 40 vorgeschaltet. Das Eingangselement des Planetengetriebes 40 ist in der Fig. 4 ebenfalls das Sonnenrad 42, das an das Gehäuse 44 der Doppelkupplung K1, K2 angeschlossen ist und somit permanent dreht. Im Unterschied zur Fig. 1 weist in der Fig. 4 das Planetengetriebe 40 einen Doppelplanetensatz auf, von dem die radial äußeren Planetenräder 49 vom Steg 46 getragen sind. Der Steg 46 ist in der Fig. 4 das Übertragungselement. Das Ausgangselement ist in der Fig. 4 durch das äußere Hohlrad 51 gebildet, das drehfest an der Eingangswelle 14 angeschlossen ist.

Die Fig. 5 bis 7 zeigen jeweils weitere Abwandlungen des Doppelkupplungsgetriebes der Fig. 1. So ist in der Fig. 5 in der Kraftflußrichtung die Kupplung K1 über einen Freiraum 51 der Kupplung K2 und der Bremse B nachgeschaltet. In den Freiraum 51 ragt bauraumgünstig das Stirnzahnrad 24 der Abtriebsstufe 25 ein. Die Kupplung K2 ist zudem der Bremse B in der Kraftflußrichtung vorgeschaltet.

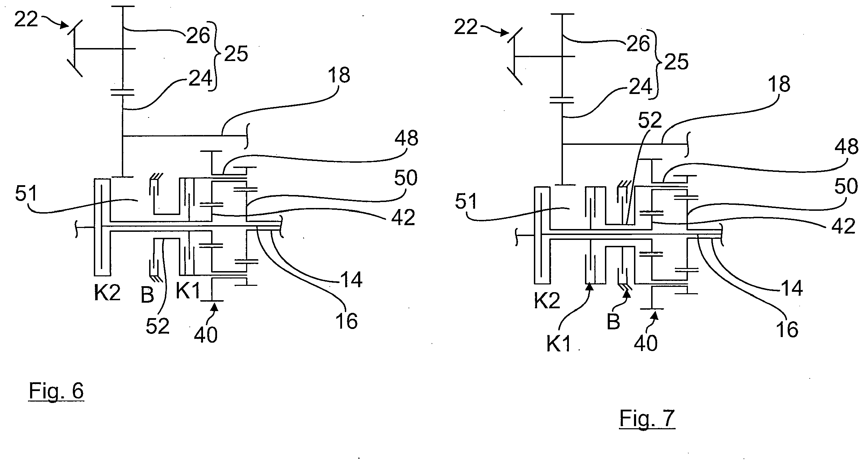

In der Fig. 6 ist die Bremse B in der Kraftflußrichtung über einen Freiraum 51 der Kupplung K2 nachgeschaltet. In den Freiraum 51 ragt ebenfalls das Stirnzahnrad 24 der Abtriebsstufe 25 ein. Die Bremse B ist der Kupplung K1 in der Kraftflußrichtung vorgeschaltet.

In der Fig. 7 ist die Kupplung K2 in der Kraftflußrichtung der Bremse B und der Kupplung K1 über den Freiraum 51 vorgeschaltet, in dem die Abtriebsstufe 25 angeordnet ist. Die Kupplung K1 ist der Bremse B in der Kraftflußrichtung vorgeschaltet.

In der Fig. 8 ist eine zur Fig. 1 alternative, jedoch nicht von der Erfindung umfasste Ausgestaltung des vorgeschalteten Planetengetriebes; funktionell gleiche Teile sind mit gleichen Bezugszeichen versehen.

Das an die Doppelkupplung K1, K2 angebaute Planetengetriebe 60 weist ein an die Kupplung K1 über die Hohlwelle 52 trieblich angeschlossenes Hohlrad 62 als Eingangselement, einen Steg 64 mit drehbar gelagerten Planetenrädern 66 als Ausgangselement und ein Sonnenrad 68 als Übertragungselement auf.

Der Steg 64 ist unmittelbar mit der Eingangs-Hohlwelle 14 des Teilgetriebes A trieblich verbunden, während das Sonnenrad 68 über eine weitere Hohlwelle 70 an die gehäusefeste Bremse B angeschlossen ist.

Des Weiteren ist zwischen dem Hohlrad 62 und der Hohlwelle 70 bzw. dem Sonnenrad 68 eine separate Lamellenkupplung K3 vorgesehen, die hydraulisch beaufschlagt das Hohlrad 62 mit dem Sonnenrad 68 verbindet und damit die 1:1-Übersetzung des Planetengetriebes 60 bildet. Die Kupplung K1 treibt dann über das blockierte Planetengetriebe 60 die Hohlwelle 14 des Teilgetriebes A an.

In die niedrigere Übersetzungsstufe ist das Planetengetriebe 60 schaltbar, indem die Kupplung K3 gelöst und die Bremse B betätigt wird. Dann treibt die geschlossene Kupplung K1 über das Hohlrad 62, die Planetenräder 66 und den Steg 64 die Eingangs-Hohlwelle 14 an, während das Sonnenrad 68 als Stützelement festgebremst ist.

Im Unterschied zu den Ausführungsbeispielen der Fig. 1 bis 7 ist in der Fig. 8 das Eingangselement (hier das äußere Hohlrad 62) nicht drehfest am Gehäuse 44 der Doppelkupplung angeschlossen. Zum Umschalten zwischen den Übersetzungsstufen ist daher nicht nur die Bremse B vorzusehen, sondern zusätzlich auch die separate Kupplung K3. Entsprechend ist in dem, in der Fig. 8 gezeigten Aufbau mit der separaten Kupplung K3 ein zusätzliches Schaltelement erforderlich.

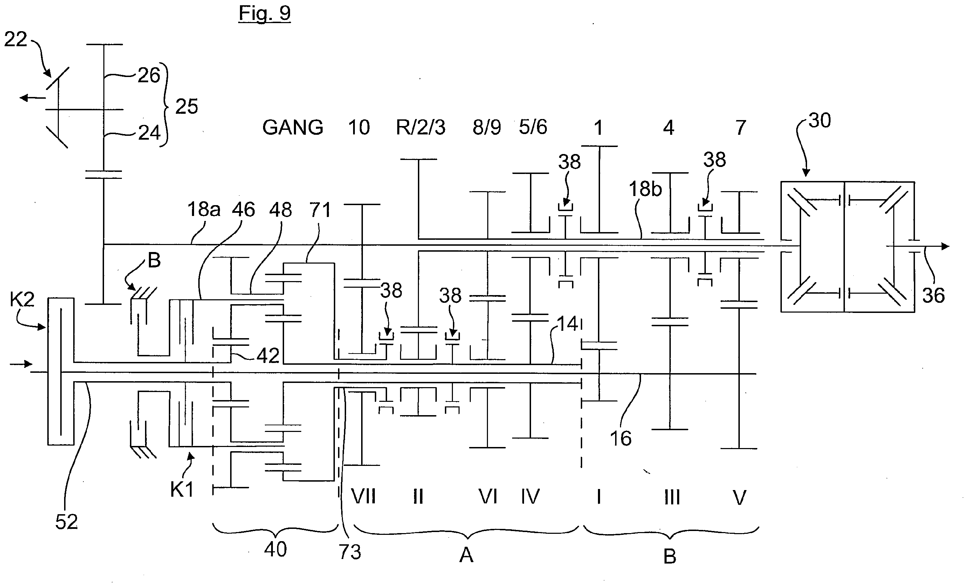

In der Fig. 9 ist ein weiteres Doppelkupplungsgetriebe gezeigt, das insgesamt zehn Vorwärtsgänge sowie einen Rückwärtsgang R und vier Schaltgruppen 38 aufweist. Im Teilgetriebe A sind vier Vorwärtsgang-Zahnradsätze II, IV, VI und VII angeordnet, die sich in bekannter Weise aus Festzahnräder und Loszahnräder zusammensetzen. Die Loszahnräder sind über die Synchronkupplungen 38 schaltbar. Die Zahnradsätze II, IV, VI, VII bilden die Vorwärtsgänge 2/3, 5/6, 8/9 und 10. Zudem bildet der Zahnradsatz II einen Rückwärtsgang R, wie es später noch erläutert ist. Im Teilgetriebe B sind die Vorwärtsgang-Zahnradsätze I, III, V vorgesehen. Diese setzen sich ebenfalls aus Festzahnräder und über Synchronkupplungen 38 schaltbare Loszahnräder zusammen und bilden die Vorwärtsgänge 1, 4 und 7.

In der Fig. 9 weisen die Teilgetriebe A und B eine gemeinsame Synchronkupplung 38 auf. Die gemeinsame Synchronkupplung 38 sitzt auf der Ausgangs-Hohlwelle 18b und ist mit dem Zahnradsatz I oder mit dem Zahnradsatz IV schaltbar.

Die in der Fig. 9 gezeigte Anordnung der Doppelkupplungen K1 und K2 entspricht im Wesentlichen der in der Fig. 5 gezeigten Anordnung. Im Unterschied zur Fig. 5 ist in der Fig. 9 das Planetengetriebe 40 zusätzlich mit einem äußeren Hohlrad 71 erweitert, das in Zahneingriff mit den kleineren Zahnrädern der Stufenplanetenräder 48 ist. Das äußere Hohlrad 71 ist mit einer Zwischen-Hohlwelle 73 verbunden, die koaxial zur Eingangs-Hohlwelle 14 gelagert ist.

Die Zwischen-Hohlwelle 73 ist über eine Synchronkupplung 38 mit dem Zahnradsatz VII (zum Schalten des 10. Vorwärtsganges) oder mit dem Zahnradsatz II (zum Schalten des Rückwärtsganges R) verbindbar. Zudem ist der Zahnradsatz II über eine weitere Synchronkupplung 38 mit der Eingangs-Hohlwelle 14 verbindbar.

Zum Schalten des Rückwärtsganges R ist der Zahnradsatz II über die auf der Zwischen-Hohlwelle 73 angeordnete Synchronkupplung 38 geschaltet. Zudem ist die Kupplung K1 geöffnet und die Bremse B betätigt. Der Kraftfluß wird daher über das Kupplungsgehäuse 44, das Sonnenrad 42, die Stufenplanetenräder 48 und das äußere Hohlrad 73 unter Drehrichtungsumkehr sowie der geschalteten Synchronkupplung 38 zum Zahnradsatz II geleitet.

Zum Schalten des 10. Vorwärtsganges ist der Zahnradsatz VII über die auf der Zwischen-Hohlwelle 73 angeordnete Synchronkupplung 38 geschaltet. Zudem ist die Bremse B geöffnet und die Kupplung K1 geschlossen. Dadurch ist das Planetengetriebe 40 verblockt, das heißt in sich blockiert. Der Kraftfluß wird daher über das Kupplungsgehäuse 44, das verblockte Planetengetriebe 40 ohne Drehrichtungsumkehr auf das äußere Hohlrad 71 und weiter zum geschalteten Zahnradsatz VII geleitet.

## Patentansprüche

1. Doppelkupplungsgetriebe als Geschwindigkeits-Wechselgetriebe für Kraftfahrzeuge, mit zwei koaxial angeordneten Eingangswellen (14, 16), die über je eine Kupplung (K1, K2) einer Doppelkupplung aktivierbar sind, mit einer Abtriebswelle (18) und mit auf den Wellen (14, 16, 18) angeordneten, mittels Schaltkupplungen (38) schaltbaren Zahnradsätzen zur Bildung mehrerer Vorwärtsgänge und eines Rückwärtsganges, wobei die Zahnradsätze in ein erstes Teilgetriebe (A) mit der einen Eingangswelle (14) und in ein zweites Teilgetriebe (B) mit der anderen Eingangswelle (18) aufgeteilt sind, **dadurch gekennzeichnet, dass**
einem der beiden Teilgetriebe (A, B) ein in zumindest zwei Übersetzungsstufen umschaltbares Planetengetriebe (40; 80) vorgeschaltet ist, das ein Eingangselement (42), ein Ausgangselement (50; 84) und ein über eine Bremse (B) festsetzbares Übertragungselement (46; 86) aufweist, und dass
das Eingangselement (42) mit einem Gehäuse (44) der Doppelkupplung permanent trieblich verbunden ist, und dass zum Schalten der ersten Übersetzungsstufe das Übertragungselement (46; 86) über die Bremse (B) festsetzbar ist und zum Schalten der zweiten Übersetzungsstufe das Übertragungselement (46; 86) über eine erste (K1) der beiden Kupplungen (K1, K2) der Doppelkupplung mit dem Eingangselement (42) verbindbar ist.

2. Doppelkupplungsgetriebe nach Anspruch 1, **dadurch gekennzeichnet, dass** durch Umschalten zwischen den beiden Übersetzungsstufen des Planetengetriebes (40; 80) zwei aufeinanderfolgende Gänge einer Schaltfolge schaltbar sind, und/oder dass das Planetengetriebe (40; 80) bei geschlossener erster Kupplung (K1) und geöffneter Bremse (B) in eine 1:1-Übersetzungsstufe umgeschaltet ist, und/oder dass das Planetengetriebe (40; 80) bei geöffneter erster Kupplung (K1) und geschlossener Bremse (B) in eine niedrigere/höhere Übersetzungsstufe umgeschaltet ist.

3. Doppelkupplungsgetriebe nach einem der vorhergehenden Ansprüche, **dadurch gekennzeichnet, dass** das Planetengetriebe (40) als Eingangselement ein erstes Sonnenrad (42), als Ausgangselement ein zweites Sonnenrad (50) und als Übertragungselement einen Steg (46) aufweist, auf dem Stufenplanetenräder (48) gelagert sind, die mit den beiden Sonnenrädern (42, 50) in Eingriff sind.

4. Doppelkupplungsgetriebe nach einem der vorhergehenden Ansprüche, **dadurch gekennzeichnet, dass** das Planetengetriebe als Minusgetriebe (80) (Standübersetzung zum Beispiel i₀ = -3) ausgelegt ist.

5. Doppelkupplungsgetriebe nach Anspruch 4, **dadurch gekennzeichnet, dass** das Eingangselement des Minusgetriebes (80) ein erstes, ständig über das Gehäuse (44) der Doppelkupplung (K1, K2) angetriebenes Sonnenrad (82) ist, das mit der einen Zahnradspur von Stufenplanetenrädern (88) eines Stegs (84) als Ausgangselement in Eingriff ist, wobei die andere Zahnradspur der Stufenplanetenräder (88) mit zweiten, auf dem Steg (84) gelagerten Planetenrädern (90) und diese mit einem zweiten Sonnenrad (86) als Übertragungselement kämmen.

6. Doppelkupplungsgetriebe nach Anspruch 5, **dadurch gekennzeichnet, dass** das als Übertragungselement dienende zweite Sonnenrad (86) über die erste Kupplung (K1) zum Herstellen der 1:1-Übersetzung antreibbar oder über die Bremse (B) zum Umschalten auf die niedrigere/höhere Übersetzung festsetzbar ist.

7. Doppelkupplungsgetriebe nach einem der vorhergehenden Ansprüche, **dadurch gekennzeichnet, dass** das Wechselgetriebe (12) acht Vorwärtsgänge aufweist, von denen der erste und zweite Vorwärtsgang (1/2), der vierte und fünfte Vorwärtsgang (4/5) und der siebte und achte Vorwärtsgang (7/8) dem ersten Teilgetriebe A mit dem vorgeschalteten Planetengetriebe (40; 80) und der dritte und sechste Vorwärtsgang (3, 6) dem zweiten Teilgetriebe B zugeordnet sind.

8. Doppelkupplungsgetriebe nach Anspruch 7, **dadurch gekennzeichnet, dass** bei einem Wechselgetriebe (12) mit mehr als acht Vorwärtsgängen dem zweiten Teilgetriebe (B) über einen weiteren Zahnradsatz der neunte Vorwärtsgang (9) und gegebenenfalls dem ersten Teilgetriebe (A) ebenfalls über einen weiteren Zahnradsatz die Vorwärtsgänge 10 und 11 (10/11) zugeordnet sind.

9. Doppelkupplungsgetriebe nach einem der vorhergehenden Ansprüche, **dadurch gekennzeichnet, dass** dem ersten Teilgetriebe (A) mit dem vorgeschalteten Planetengetriebe (40; 80) ein Zahnradsatz mit einem Zwischenzahnrad zur Darstellung von zwei Rückwärtsgängen (R1, R2) zugeordnet ist.

10. Doppelkupplungsgetriebe nach Anspruch 9, **dadurch gekennzeichnet, dass** der Zahnradsatz mit Zwischenzahnrad zur Bildung des Rückwärtsganges (R) im zweiten Teilgetriebe (B) angeordnet ist.

11. Doppelkupplungsgetriebe nach einem der vorhergehenden Ansprüche, **dadurch gekennzeichnet, dass** in der Kraftflußrichtung die erste Kupplung (K1) über einen Freiraum (51) der zweiten Kupplung (K2) der Doppelkupplung und der Bremse (B) nachgeschaltet ist, und dass insbesondere eine Antriebskomponente, etwa ein Stirnzahnrad (24) einer Abtriebsstufe (25), in den Freiraum (51) einragt.

12. Doppelkupplungsgetriebe nach einem der Ansprüche 1 bis 10, **dadurch gekennzeichnet, dass** in der Kraftflußrichtung die Bremse (B) über einen Freiraum (51) der zweiten Kupplung (K2) nachgeschaltet ist, wobei insbesondere die Bremse (B) der ersten Kupplung (K1) in der Kraftflußrichtung vorgeschaltet ist.

13. Doppelkupplungsgetriebe nach einem der Ansprüche 1 bis 10, **dadurch gekennzeichnet, dass** in der Kraftflußrichtung die zweiten Kupplung (K2) der Bremse (B) und der ersten Kupplung (K1) über einen Freiraum (51) vorgeschaltet ist, wobei insbesondere die erste Kupplung (K1) der Bremse (B) in der Kraftflußrichtung vorgeschaltet ist.

14. Doppelkupplungsgetriebe nach einem der vorhergehenden Ansprüche, **dadurch gekennzeichnet, dass** zur Bereitstellung eines Rückwärtsganges (R) das Planetengetriebe (40) mit einem äußeren Hohlrad (73) erweitert ist, das mit einer koaxial auf der Eingangs-Hohlwelle (14) angeordneten Zwischen-Hohlwelle (73) verbunden ist, die über eine auf der Zwischen-Hohlwelle (73) angeordnete Schaltkupplung (38) mit einem der Vorwärtsgang-Zahnradsätzen (II) verbindbar ist, und dass zum Schalten des Rückwärtsganges (R) der Vorwärtsgang-Zahnradsatz (II) über die auf der Zwischen-Hohlwelle (73) angeordnete Synchronkupplung (38) verbindbar ist, und zwar bei geöffneter erster Kupplung (K1) und betätigter Bremse (B).

15. Doppelkupplungsgetriebe nach Anspruch 14, **dadurch gekennzeichnet, dass** über die auf der Zwischen-Hohlwelle (73) angeordnete Synchronkupplung (38) ein weiterer Vorwärtsgang-Zahnradsatz (VII) schaltbar ist, und zwar bei geschlossener erster Kupplung (K1) und geöffneter Bremse (B).

## Claims

1. Dual clutch transmission as speed-change transmission for motor vehicles, having two coaxially arranged input shafts (14, 16) which are able to be activated via in each case one clutch (K1, K2) of a dual clutch, having an output shaft (18) and having gear sets arranged on the shafts (14, 16, 18) which can be shifted by means of shift couplings (38) to form several forward gears and one reverse gear, wherein the gear sets are divided into a first sub-transmission (A) having the one input shaft (14) and into a second sub-transmission (B) having the other input shaft (18) **characterised in that** a planetary gear (40; 80) which can be shifted into two transmission ratio stages is connected upstream of one of the two sub-transmissions (A, B), said planetary gear having one input element (42), one output element (50; 84) and one transfer element (46; 86) which can be fixed via a brake (B), and that the input element (42) is permanently operatively connected with a housing (44) of the dual clutch, and that for shifting the first transmission ratio stage the transfer element (46; 86) can be fixed via the brake (B) and for shifting the second transmission ratio stage the transfer element (46; 86) can be connected via a first (K1) of the two clutches (K1, K2) of the dual coupling with the input element (42).

2. Dual clutch transmission according to claim 1 **characterised in that** by shifting between the two transmission ratio stages of the planetary gear (40; 80) two consecutive gears of a shifting sequence can be shifted, and/or that the planetary gear (40; 80) in the case of a closed first clutch (K1) and opened brake (B) is shifted into a 1:1 transmission ratio stage, and/or that the planetary gear (40; 80) in the case of an opened first clutch (K1) and closed brake (B) is shifted into a lower/higher transmission ratio stage.

3. Dual clutch transmission according to any of the preceding claims, **characterised in that** the planetary gear (40) has as input element a first sun wheel (42), as output element a second sun wheel (50) and as transfer element a bar (46) on which step planetary gears (48) are supported, which engage with the two sun wheels (42, 50).

4. Dual clutch transmission according to any of the preceding claims, **characterised in that** the planetary gear is designed as a negative gear (80) (stationary gear ratio for example i₀ = -3).

5. Dual clutch transmission according to claim 4, **characterised in that** the input element of the negative gear (80) is a first sun gear (82) constantly driven via the housing (44) of the dual clutch (K1, K2), which sun gear engages as output element with the first gear wheel track of step planetary gears (88) of a bar (84), wherein the other gear wheel track of the step planetary gears (88) mesh with second planetary gears (90) supported on the bar (84) and said second planetary gears mesh with a second sun gear (86), as transfer element.

6. Dual clutch transmission according to claim 5, **characterised in that** the second sun gear (86) serving as transfer element can be driven via the first clutch (K1) for creating the 1:1 ratio or can be fixed via the brake (B) for shifting to the lower/higher ratio.

7. Dual clutch transmission according to any of the preceding claims, **characterised in that** the change speed transmission (12) has eight forwards gears, of which the first and second forwards gear (1/2), the fourth and fifth forwards gear (4/5) and the seventh and eighth forwards gear (7/8) are assigned to the first sub-transmission A having the planetary gear (40; 80) having been connected upstream and the third and sixth forwards gear (3, 6) are assigned to the second sub-transmission B.

8. Dual clutch transmission according to claim 7, **characterised in that** in the case of a change speed transmission (12) having more than eight forwards gears, the ninth forwards gear (9) is assigned to the second sub- transmission (B) via a further gear set and where necessary the forwards gears 10 and 11 (10/11) are assigned to the first sub-transmission (A) in the same way via a further gear set.

9. Dual clutch transmission according to any of the preceding claims, **characterised in that** a gear set having an intermediate gear wheel to represent two reverse gears (R1, R2) is assigned to the first sub-transmission (A) having the planetary gear (40; 80) having been connected upstream.

10. Dual clutch transmission according to claim 9, **characterised in that** the gear set having an intermediate gear wheel for forming the reverse gear (R) is arranged in the second sub-transmission (B).

11. Dual clutch transmission according to any of the preceding claims, **characterised in that** in the force flow direction the first clutch (K1) is connected via a free space (51) downstream of the second clutch (K2) of the dual clutch and of the brake (B), and that in particular a drive component, specifically a spur gear wheel (24) of an output step (25) juts into the free space (51).

12. Dual clutch transmission according to any of claims 1 to 10, **characterised in that** in the force flow direction the brake (B) is connected via a free space (51) downstream of the second clutch (K2), wherein in particular the brake (B) is connected upstream of the first clutch (K1) in the force flow direction.

13. Dual clutch transmission according to any of claims 1 to 10, **characterised in that** in the force flow direction the second clutch (K2) is connected via a free space (51) upstream of the brake (B) and the first clutch (K1), wherein in particular the first clutch (K1) is connected in the force flow direction upstream of the brake (B).

14. Dual clutch transmission according to any of the preceding claims, **characterised in that** for the provision of a reverse gear (R) the planetary gear (40) is extended with an outer hollow wheel (73), which is connected with an interim hollow shaft (73) arranged coaxially on the input hollow shaft (14), which interim hollow shaft can be connected via a shift coupling (38) arranged on the interim hollow shaft (73) with one of the forwards gear gear sets (II), and that for shifting the reverse gear (R),the forwards gear gear set (II) can be connected via the synchronised clutch (38) arranged on the interim hollow shaft (73), and specifically in the case of an opened first clutch (K1) and actuated brake (B).

15. Dual clutch transmission according to claim 14, **characterised in that** via the synchronised clutch (38) arranged on the interim hollow shaft (73) a further forwards gear gear set (VII) can be shifted, and specifically in the case of a closed first clutch (K1) and opened brake (B).

## Revendications

1. Boîte de vitesses à double embrayage en tant que boîte de changement de vitesses pour véhicules automobiles, avec deux arbres d'entrée (14, 16) agencés coaxialement, qui sont activables par le biais de respectivement un embrayage (K1, K2) d'un double embrayage, avec un arbre de sortie (18) et avec des jeux de roues dentées agencés sur les arbres (14, 16, 18), commutables au moyen d'embrayages (38) pour la formation de plusieurs marches avant et d'une marche arrière, dans laquelle les jeux de roues dentées sont répartis en une première transmission partielle (A) avec l'un arbre d'entrée (14) et en une deuxième transmission partielle (B) avec l'autre arbre d'entrée (18), **caractérisée en ce qu'**un engrenage planétaire (40; 80) commutable dans au moins deux rapports de transmission, qui présente un élément d'entrée (42), un élément de sortie (50 ; 84) et un élément de transmission (46 ; 86) pouvant être fixé par le biais d'un frein (B), est monté en amont d'une des deux transmissions partielles (A, B), et que l'élément d'entrée (42) est en liaison motrice permanente avec un boîtier (44) du double embrayage, et que l'élément de transmission (46 ; 86) peut être fixé par le biais du frein (B) pour la commutation du premier rapport de transmission et l'élément de transmission (46 ; 86) peut être relié à l'élément d'entrée (42) par le biais d'un premier (K1) des deux embrayages (K1, K2) du double embrayage pour la commutation du deuxième rapport de transmission.

2. Boîte de vitesses à double embrayage selon la revendication 1, **caractérisée en ce que** deux vitesses successives d'une séquence de commutation sont commutables par commutation entre les deux rapports de transmission de l'engrenage planétaire (40 ; 80), et/ou que l'engrenage planétaire (40; 80) est commuté lorsque le premier embrayage (K1) est fermé et le frein (B) est ouvert dans un rapport de transmission 1:1, et/ou que l'engrenage planétaire (40; 80) est commuté lorsque le premier embrayage (K1) est ouvert et le frein (B) est fermé dans un rapport de transmission inférieur/supérieur.

3. Boîte de vitesses à double embrayage selon l'une quelconque des revendications précédentes, **caractérisée en ce que** l'engrenage planétaire (40) présente en tant qu'élément d'entrée une première roue solaire (42), en tant qu'élément de sortie une deuxième roue solaire (50) et en tant qu'élément de transmission une entretoise (46), sur laquelle sont logées des roues planétaires étagées (48), qui sont en prise avec les deux roues solaires (42, 50).

4. Boîte de vitesses à double embrayage selon l'une quelconque des revendications précédentes, **caractérisée en ce que** l'engrenage planétaire est conçu en tant que transmission négative (80) (transmission d'état par exemple i₀ = -3).

5. Boîte de vitesses à double embrayage selon la revendication 4, **caractérisée en ce que** l'élément d'entrée de la transmission négative (80) est une première roue solaire (82) entraînée en permanence par le biais du boîtier (44) du double embrayage (K1, K2), qui est en prise avec l'une piste de roue dentée de roues planétaires étagées (88) d'une entretoise (84) en tant qu'élément de sortie, dans laquelle l'autre piste de roue dentée des roues planétaires étagées (88) engrènent avec des deuxièmes roues planétaires (90) logées sur l'entretoise (84) celles-ci avec une deuxième roue solaire (86) en tant qu'élément de transmission.

6. Boîte de vitesses à double embrayage selon la revendication 5, **caractérisée en ce que** la deuxième roue solaire (86) servant d'élément de transmission peut être entraînée par le biais du premier embrayage (K1) pour l'établissement de la transmission 1:1 ou peut être fixée par le biais du frein (B) pour la commutation sur la transmission inférieure/supérieure.

7. Boîte de vitesses à double embrayage selon l'une quelconque des revendications précédentes, **caractérisée en ce que** la boîte de changement (12) présente huit marches avant, dont la première et deuxième marche avant (1/2), la quatrième et cinquième marche avant (4/5) et la septième et huitième marche avant (7/8) sont associées à la première transmission partielle A avec l'engrenage planétaire monté en amont (40; 80) et la troisième et sixième marche avant (3, 6) sont associées à la deuxième transmission partielle B.

8. Boîte de vitesses à double embrayage selon la revendication 7, **caractérisée en ce que** dans le cas d'une boîte de changement (12) avec plus de huit marches avant, la neuvième marche avant (9) est associée à la deuxième transmission partielle (B) par le biais d'un autre jeu de roues dentées et le cas échéant les marches avant 10 et 11 (10/11) sont associées à la première transmission partielle (A) également par le biais d'un autre jeu de roues dentées.

9. Boîte de vitesses à double embrayage selon l'une quelconque des revendications précédentes, **caractérisée en ce qu'**un jeu de roues dentées avec une roue dentée intermédiaire pour la représentation de deux marches arrière (R1, R2) est associé à la première transmission partielle (A) avec l'engrenage planétaire monté en amont (40; 80).

10. Boîte de vitesses à double embrayage selon la revendication 9, **caractérisée en ce que** le jeu de roues dentées avec roue dentée intermédiaire pour la formation de la marche arrière (R) est agencé dans la deuxième transmission partielle (B).

11. Boîte de vitesses à double embrayage selon l'une quelconque des revendications précédentes, **caractérisée en ce que** le premier embrayage (K1) est monté dans la direction de flux de force en aval du deuxième embrayage (K2) du double embrayage et du frein (B) par le biais d'un espace vide (51), et qu'en particulier une composante d'entraînement, comme une roue dentée droite (24) d'un niveau de sortie (25), pénètre dans l'espace vide (51).

12. Boîte de vitesses à double embrayage selon l'une quelconque des revendications 1 à 10, **caractérisée en ce que** le frein (B) est monté dans la direction de flux de force en aval du deuxième embrayage (K2) par le biais d'un espace vide (51), dans laquelle en particulier le frein (B) est monté en amont du premier embrayage (K1) dans la direction de flux de force.

13. Boîte de vitesses à double embrayage selon l'une quelconque des revendications 1 à 10, **caractérisée en ce que** le deuxième embrayage (K2) est monté dans la direction de flux de force en amont du frein (B) et du premier embrayage (K1) par le biais d'un espace vide (51), dans laquelle en particulier le premier embrayage (K1) est monté en amont du frein (B) dans la direction de flux de force.

14. Boîte de vitesses à double embrayage selon l'une quelconque des revendications précédentes, **caractérisée en ce que** pour la mise à disposition d'une marche arrière (R), l'engrenage planétaire (40) est élargi avec une roue creuse extérieure (73), qui est reliée à un arbre creux intermédiaire (73) agencé coaxialement sur l'arbre creux d'entrée (14), qui peut être relié à un des jeux de roues dentées de marche avant (II) par le biais d'un embrayage (38) agencé sur l'arbre creux intermédiaire (73), et que pour la commutation de la marche arrière (R), le jeu de roues dentées de marche avant (II) peut être relié par le biais de l'embrayage synchrone (38) agencé sur l'arbre creux intermédiaire (73), et ce lorsque le premier embrayage (K1) est ouvert et le frein (B) est actionné.

15. Boîte de vitesses à double embrayage selon la revendication 14, **caractérisée en ce qu'**un autre jeu de roues dentées de marche avant (VII) peut être commuté par le biais de l'embrayage synchrone (38) agencé sur l'arbre creux intermédiaire (73), et ce lorsque le premier embrayage (K1) est fermé et le frein (B) est ouvert.
